# NEUE EUROPÄISCHE PATENTSCHRIFT

(11) **EP 0 219 777 B2**
(45) Veröffentlichungstag und Bekanntmachung des Hinweises auf die Entscheidung über den Einspruch: **07.12.1994**
(45) Hinweis auf die Patenterteilung: 27.03.1991
(21) Anmeldenummer: 86114055.6
(22) Anmeldetag: 10.10.1986
(51) Int. Cl.: H02G 1/14, H01R 4/70

(54) **Verfahren zur elektrisch isolierenden Umhüllung der Verbindungsstelle zwischen elektrisch leitenden Elementen, sowie Umhüllungsmaterial zur Verwendung bei diesem Verfahren**
Process for the electrically insulating sheathing of the connection between electrically conducting elements, and sheath material for use in this process
Procédé de revêtement électriquement isolant d'une connexion entre éléments électriquement conducteurs ainsi que matériau de revêtement à utiliser dans ce procédé

(30) Priorität: 18.10.1985 DE 3537167
(43) Veröffentlichungstag der Anmeldung: 29.04.1987
(73) Patentinhaber: Erich Janisch Kunststoffe, D-91180 Heideck (DE)
(72) Erfinder: Janisch, Erich Rudolf, Masch.-Ing. VDI, D-8548 Heideck (DE)
(74) Vertreter: Blumbach Weser Bergen Kramer

(56) Entgegenhaltungen:
- EP-A- 0 046 027
- DE-C- 2 531 789
- GB-A- 1 177 131
- JP-A- 545 661
- JP-A- 4 858 387
- JP-U- 3 821 876
- US-A- 4 207 429

## Beschreibung

Die Erfindung betrifft ein Verfahren zur elektrisch isolierenden Umhüllung derverbindungsstelle zwischen elektrisch leitenden Elementen mit einem die Verbindungsstelle überdeckenden, elektrisch isolierenden Umhüllungsmaterial nach dem Oberbegriff des Anspruchs 1. Die Erfindung betrifft weiter ein Umhüllungsmaterial für eine elektrisch isolierende Umhüllung.

Bei den elektrisch leitenden Elementen kann es sich beispielsweise um Leitungsdrähte in elektrischen Anlagen handeln, die beispielsweise mittels einer UltraschallSchweißvorrichtung miteinander verbunden werden. Zur Verbindung der elektrisch leitenden Elemente ist es erforderlich, die mit einer elektrisch isolierenden Umhüllung versehenen elektrisch leitenden Elemente an derVerbindungssteiie abzuisolieren. Anschliessend werden die elektrisch leitenden Elemente entlang der Verbindungsstelle beispielsweise mittels einer Ultraschall-Schweissvorrichtung miteinander verschweisst. Nach der Durchführung der Ultraschall-Schweissverbindung ist es erforderlich, die Verbindungsstelle wieder mit einer elektrisch isolierenden Umhüllung zu versehen. Diese elektrisch isolierende Umhüllung muss nicht nur eine bestimmte Durchschlagfestigkeit und einen bestimmten spezifischen Widerstand aufweisen, sondern auch temperaturbeständig und dicht sein. Die elektrisch isolierende Umhüllung muss eine bestimmte Dichtheit aufweisen, um einen Schutz gegen Feuchtigkeit zu bilden, welche die Verbindungsstelle zwischen den elektrisch leitenden Elementen durch Korrosion oder Oxidation negativ beeinflussen, d.h. den Übergangswiderstand erhöhen würde.

Bei einem bekannten Verfahren zur elektrisch isolierenden Umhüllung der Verbindungsstelle zwischen elektrisch leitenden Elementen wird um die Verbindungsstelle der elektrisch leitenden Elemente ein selbstklebendes Isolierband herumgewickelt. Das Herumwickeln eines selbstklebenden Isolierbandes um die Verbindungsstelle ist jedoch relativ zeitaufwendig.
Bei einem anderen Verfahren zur elektrisch isolierenden Umhüllung derverbindungsstelle zwischen elektrisch leitenden Elementen wird die Verbindungsstelle mit einem Kunststoff umspritzt. Dazu ist ein Spritzpresswerkzeug erforderlich, das um die Verbindungsstelle herum angeordnet werden muss. Eine derartige Kunststoff-Umspritzung der Verbindungsstelle weist eine relativ grosse Wanddicke auf, um die geforderten elektrischen Eigenschaften der elektrisch isolierenden Umhüllung zu gewährleisten. Die Umspritzung derverbindungsstelle mit Kunststoff, bei dem es sich insbesondere um Polyvinylchlorid handeln kann, weist infolge ihrer relativ grossen Wanddicke den Nachteil auf, dass das Einschieben der miteinander verbundenen, elektrisch leitenden Elemente in einen Leitungskanal Probleme aufwerfen kann.

Bei einem anderen Verfahren zur elektrisch isolierenden Umhüllung derVerbindungssteiie zwischen elektrisch leitenden Elementen wird ein Schrumpfschlauch verwendet, der durch Wärmeeinwirkung auf die Verbindungsstelle aufgeschrumpft wird. Eine derartige Umhüllung mit einem Schrumpfschlauch weist jedoch den Nachteil auf, dass Hohlräume zwischen der elektrisch isolierenden Umhüllung und der Verbindungsstelle nicht vollständig vermieden werden können, so dass die Verbindungsstelle gegen Korrosionen und Oxidationen nicht sicher geschützt ist.
Die gleichen Mängel treten bei einem anderen bekannten Verfahren zur elektrisch isolierenden Umhüllung der Verbindungsstelle zwischen elektrisch leitenden Elementen auf, bei dem eine Isolierfolie mittels einer Ultraschall-Schweissvorrichtung um die Verbindungsstelle herum angeordnetwird. Auch bei diesem Verfahren sind Hohlräume zwischen der Verbindungsstelle und der elektrisch isolierenden Umhüllung nicht sicher zu vermeiden, so dass in die Hohlräume zwischen der Verbindungsstelle und der elektrisch isolierenden Umhüllung Feuchtigkeit eindringen kann, die zu Korrosionen und Oxidationen derVerbindungsstelleführt. Durch derartige chemische Veränderungen der Verbindungsstelle kann der Übergangswiderstand der Verbindungsstelle unzulässig hohe Werte erreichen.

Bei einem weiteren bekannten Verfahren (DE-C-2 531 789) wird auf die Verbindungsstellen ein zähflüssiges Füllmittel aufgebracht und nach dem Auftragen des Füllmittels wird ein elektrisch isolierendes Umhüllungsmaterial auf die Verbindungsstelle und angrenzende Bereiche der leitenden Elemente aufgebracht. Die Enden des Umhüllungsmaterials werden unter Bildung einer Schweißnaht so verschweißt, daß das Füllmittel in den Zwischenraum zwischen der Verbindungsstelle und dem Umhüllungsmaterial gedrückt wird.

Dadurch, daß bei der Durchführung dieses bekannten Verfahrens auf eine Verbindungsstelle, jeweils getrennt voneinander, ein zähflüssiges Füllmittel und ein Umhüllungsmaterial aufgebracht werden müssen, sind die Durchführung des Verfahrens wie auch eine hierfür erforderliche Vorrichtung relativ aufwendig. Da ferner Füllmaterial und Umhüllungsmaterial nicht in einer festen Zuordnung zueinander aufgebracht werden, ist nicht gewährleistet, daß innerhalb des Zwischenraums keine Hohlräume auftreten können.

Es ist ferner bekannt (DE-A-2 151 112), zur elektrisch isolierenden Umhüllung einen vorgeformten, ziemlich harten und unelastischen Isolierkörper in einer Presse, mit entsprechend geformten Stem pelunterteil und Stempeloberteil, um eine Verbindungsstelle zu pressen. Damit ein guter Feuchtigkeitsschutz erzielt wird, wird dabei vorgeschlagen, daß die Verbindungsstelle vor dem Einpressen in den Isolierkörper mit einer Füllmasse versehen wird. Die Durchführung dieses Verfahrens ist relativ aufwendig, und durch das Anordnen einer Füllmasse innerhalb eines vorgeformten Isolierkörpers ist nicht sichergestellt, daß zwischen diesem und der Verbindungsstelle keine Hohlräume entstehen können.

Aus JP-U-38 21876 ist weiterhin eine elektrisch isolierende Umhüllung der Verbindungsstelle zwischen elektrisch leitenden Elementen bekannt, bei der die Umhüllung aus einem zweilagigen Material gebildet wird, wobei die innere Lage aus einem selbstschmelzenden klebrigen Material und die äußere Lage aus einem Kunststoff besteht.

Deshalb liegt der vorliegenden Erfindung die Aufgabe zugrunde, ein Verfahren der eingangs genannten Art, sowie ein Umhüllungsmaterial anzugeben, mit dem eine elektrisch isolierende Umhüllung derVerbindungsstelle zwischen elektrisch leitenden Elementen in einfacher, zeitsparender Weise möglich ist, und bei der Hohlräume zwischen der Verbindungsstelle der elektrisch leitenden Elemente und der elektrisch isolierenden Umhüllung sicher vermieden werden.

Diese Aufgabe wird erfindungsgemäß bei einem gattungsgemäßen Verfahren mit den kennzeichnenden Merkmalen des Anspruchs 1, sowie bei einem Umhüllungsmaterial mit dem Kennzeichnenden Merkmalen des Anspruchs 5 gelöst.

Durch die Anwendung eines aus zwei Lagen mit unterschied-lichen Schmelztemperaturen bestehenden Umhüllungsmaterials, das derart über der Verbindungsstelle angeordnet wird, daß die Lage mit der niedrigeren Schmelztemperatur sich auf der der Verbindungsstelle zugewandten Seite befindet, wird der besondere Vorteil erzielt, dass beim Herumpressen des zweilagigen Umhüllungsmaterials um die Verbindungsstelle mittels der Ultraschall-Schweissvorrichtung die derVerbindungsstelle zugewandte Lage mit der niedrigeren Schmelztemperatur mindestens soweit erweicht, dass sie den Raum zwischen der verbindungsstelle und der nachdrückenden Lage mit der höheren Schmelztemperatur ausfüllt. Auf diese Weise werden Hohlräume zwischen der äusseren Lage mit der höheren Schmelztemperatur und der Verbindungsstelle in einfacher Weise sichervermieden, so dass die mit dem erfindungsgemässen Verfahren hergestellte elektrisch isolierende Umhüllung einen sehr guten Feuchtigkeitsschutz darstellt. Im gleichen Arbeitsgang, in dem die der Verbindungsstelle zugewandte Lage mit der niedrigeren Schmelztemperatur soweit erweicht, dass sie den Raum zwischen der Verbindungsstelle ausfüllt, wird die nachdrükkende Lage mit der höheren Schmelztemperatur um die Verbindungsstelle derart herumgepresst, dass sie an der Isolation der elektrisch leitenden Elemente eng anliegt und somit die Verbindungsstelle nach aussen hin dicht umschliesst.

Erfindungsgemäss kann das Umhüllungsmaterial an zwei gegenüberliegenden Seiten über der Verbindungsstelle angeordnet werden, wobei die zwei Lagen mit der niedrigeren Schmelztemperatur der Verbindungsstelle zugewandt sind. Bei diesem Verfahren werden also zwei Umhüllungsmaterialien angewandt, die je eine Lage mit einer niedrigeren Schmelztemperatur und eine Lage mit einer höheren Schmelztemperatur aufweisen, wobei die zwei Lagen mit der niedrigen Schmelztemperatur der Verbindungsstelle zugewandt werden. Unmittelbar nach der dichten Umhüllung der Verbindungsstelle werden die zwei äusseren Lagen mit der höheren Schmelztemperatur seitlich neben der Verbindungsstelle in deren Längsrichtung abgeschnitten.

Bei einem anderen erfindungsgemässen Verfahren wird das Umhüllungsmaterial um die Verbindungsstelle herumgewunden, wobei die Lage mit der niedrigeren Schmelztemperatur der Verbindungsstelle zugewandt wird. Bei diesem Verfahren wird also nur ein aus zwei Lagen bestehendes Umhüllungsmaterial angewandt. Ein Vorteil des zuletzt genannten Verfahrens besteht darin, dass nach der Umhüllung der Verbindungsstelle mittels der Ultraschall-Schweissvorrichtung nur eine Schneidkante entsteht, so dass der Platzbedarf für die Umhüllung weiter reduziert ist.

Es hat sich als zweckmässig erwiesen, das beim erfindungsgemässen Verfahren das Umhüllungsmaterial streifenförmig ausgebildet ist und in einer zur Längsrichtung der Verbindungsstelle annähernd senkrechten Richtung zur Verbindungsstelle zugeführt wird, und dass das streifenförmige Umhüllungsmaterial nach der Umhüllung der Verbindungsstette mit der Ultraschall-Schweissvorrichtung seitlich neben der VerbindungssteIle in Querrichtung des streifenförmigen Umhüllungsmaterials abgetrenntwird. Dieses Abtrennen des streifenförmigen Umhüllungsmaterials erforlgt umittelbar nach der Umhüllung der Verbindungsstelle mit der Ultraschall-Schweissvorrichtung, die zu diesem Zweck mit mindestens einer Schneide ausgebildet ist.

Das erfindungsgemässe Verfahren weist die Vorteile auf, dass die elektrisch isolierende Umhüllung einer Verbindungsstelle zwischen elektrisch leitenden Elementen sehr zeitsparend durchgeführt werden kann, und dass infolge der Verwendung eines aus zwei Lagen mit unterschiedlichen Schmelztemperaturen bestehenden Umhüllungsmaterials eine dichte Umhüllung der Verbindungsstelle möglich ist, bei der in besonders vorteilhafter Weise Hohlräume zwischen der Verbindungsstelle und der elektrisch isolierenden Umhüllung sichervermieden werden. Auf diese Weise ergibt sich eine feuchtesichere Umhüllung einer Verbindungsstelle zwischen elektrisch leitenden Elementen, bei denen es sich beispielsweise um Volldrähte oder Litzendrähte handeln kann, die insbesondere durch Ultraschall-Schweissung miteinander verbunden werden.

Selbstverständlich ist das erfindungsgemässe Verfahren auch bei anderen an sich bekannten Verbindungen zwischen elektrisch leitenden Elementen anwendbar.
Als derartige Verbindungen kommen beispielsweise Lötverbindungen zwischen Drähten oder Löt- bzw. Ultraschall-Schweissverbindungen zwischen Drähten und Steckfahnen oder dergleichen in Betracht.

Das erfindungsgemässe Umhüllungsmaterial zur Verwendung bei einem Verfahren der oben beschriebenen Art ist dadurch gekennzeichnet, dass die Lage mit dem niedrigeren Schmelzpunkt mit der Lage mit dem höheren Schmelzpunkt zu einem streifenförmigen Umhüllungsmaterial einstückig verbunden ist, und dass die Breite der Lage mit dem niedrigeren Schmelzpunkt geringer ist als die Breite der Lage mit dem höheren Schmelzpunkt. Durch die einstückige Verbindung der beiden Lagen ergibt sich ein einfach zu handhabendes erfindungsgemässes Umhüllungsmaterial.

Durch die Ausbildung des erfindungsgemässen Umhüllungsmaterials mit unterschiedlichen Breiten der beiden Lagen unterschiedlicher Schmelztemperatur ergibt sich der Vorteil, dass die Lage mit der höheren Schmelztemperatur mit ihren beiden gegenüberliegenden Seitenrändern dicht an der Isolation der elektrisch leitenden Elemente anliegt, und dass die Lage mit der niedrigeren Schmelztemperatur den Raum zwischen der Verbindungsstelle und der Lage mit der höheren Schmelztemperatur vollständig ausfüllt und gegebenenfalls sogar noch zwischen der Lage mit der höheren Schmelztemperatur und der Isolation der elektrisch leitenden Elemente mit einem überschüssigen Materialanteil austritt.

Auf diese Weise wird gewährleistet, dass zwischen nebeneinander angeordneten elektrisch leitenden Elementen keine Feuchtigkeit bis zur Verbindungsstelle der elektrisch leitenden Elemente eindringen kann.

Beim erfindungsgemässen Umhüllungsmaterial hat es sich als zweckmässig erwiesen, dass die Lage mit der höheren Schmelztemperatur an beiden Längskanten des streifenförmigen Umhüllungsmaterials über die Lage mit der niedrigeren Schmelztemperatur übersteht. Durch eine derartige Ausbildung des Umhüllungsmaterials wird sichergestellt, dass die Lage mit der höheren Schmelztemperatur an den beiden gegenüberliegenden Seiten einer Verbindungsstelle dicht an der Isolation der miteinanderverbundenen elektrisch leitenden Elemente anliegt.

Beim erfindungsgemässen Umhüllungsmaterial weist die Lage mit der höheren Schmelztemperatur vorzugsweise eine grössere Härte auf als die Lage mit der niedrigeren Schmelztemperatur. Ausserdem hat es sich als Vorteilhaft erwiesen, dass die Lage mit der höheren Schmelztemperatur eine glattere Oberfläche aufweist als die Lage mit der niedrigeren Schmelztemperatur. Durch die Ausbildung der Lage mit der höheren Schmelztemperatur mit einer glatteren Oberfläche ergibt sich der Vorteil, dass das Umhüllungsmaterial problemlos in die Ultraschall-Schweissvorrichtung eingeschoben werden kann. Die Ausbilding der der Verbindungsstelle zwischen den elektrisch leitenden Elementen zugewandten Lage mit der niedrigeren Schmelztemperatur mit einem grösseren Reibungskoeffizienten weist den Vorteil auf, dass das erfindungsgemässe Umhüllungsmaterial in Bezug zu der zu umhüllenden Verbindungsstelle sehr genau positioniert werden kann.

Als besonders vorteilhaft hat es sich erwiesen, dass beim erfindungsgemässen Umhüllungsmaterial die Lage mit der niedrigeren Schmelztemperatur eine Beschichtung auf der Lage mit der höheren Schmelztemperatur ist.

Beim erfindungsgemässen Umhüllungsmaterial kann mindestens die Lage mit der höheren Schmelztemperatur transparent sein. Durch eine derartige Ausbildung des Umhüllungsmaterials ergibt sich der Vorteil, dass mit blossem Auge eine Qualitätskontrolle der Umhüllung einer Verbindungsstelle zwischen elektrisch leitenden Elementen möglich ist, weil mit blossem Auge zu erkennen ist, dass der Raum zwischen der Verbindungsstelle und der äusseren Lage des Umhüllungsmaterials vollständig mit dem Material der Lage mit der niedrigeren Schmelztemperatur ausgefüllt ist. Die Lage mit der niedrigeren Schmelztemperatur kann ebenfalls transparent sein..
Bei einer anderen Ausbildung des erfindungsgemässen Umhüllungsmaterials ist die Lage mit der niedrigeren Schmelztemperatur eingefärbt. Durch eine derartige Ausbildung des Umhüllungsmaterials ergibt sich eine einfache Möglichkeit, festzustellen, dass der Zwischenraum zwischen der Verbindungsstelle und der transparenten Lage mit der höheren Schmelztemperatur vollständig ausgefüllt ist, so dass sich eine feuchtesichere Umhüllung der Verbindungsstelle ergibt.

Die Lage mit der höheren Schmelztemperatur ist vorzugsweise ein hartgestelltes Polyvinylchlorid mit einer Härte von 90 ± 5 nach Shore A und die Lage mit der niedrigeren Schmelztemperature ist vorzugsweise ein hochtemperaturbeständiges Weich-Polyvinylchorid mit einer Härte von 50 ± 5 nach Shore A.

Weitere Einzelheiten, Merkmale und Vorteile des erfindungsgemässen Verfahrens sowie des erfindungsgemässen Umhüllungsmaterials zur Verwendung bei diesem Verfahren ergeben sich aus der nachfolgenden Beschreibung von in der Zeichnung dargestellter Ausführungsformen von Ultraschall-Schweissvorrichtungen. Es zeigen -:
Figur 1 eine Seitenansicht einer Vorrichtung zur elektrisch isolierenden Umhüllung derverbindungsstelle zwischen elektrisch leitenden Elementen,
Figur 2 eine Vorderansicht der Vorrichtung gemäss Figur 1 in Blickrichtung des Pfeiles 1,
Figur 3 eine Verbindungsstelle zwischen abschnittsweise dargestellten elektrisch leitenden Elementen, die mit einer erfindungsgemässen elektrisch isloierenden Umhüllung dicht umschlossen ist, und
Figur 4 einen Querschnitt durch eine mit einer erfindungsgemässen Umhüllung dicht umschlossenen Verbindungsstelle gemäss Figur 3.

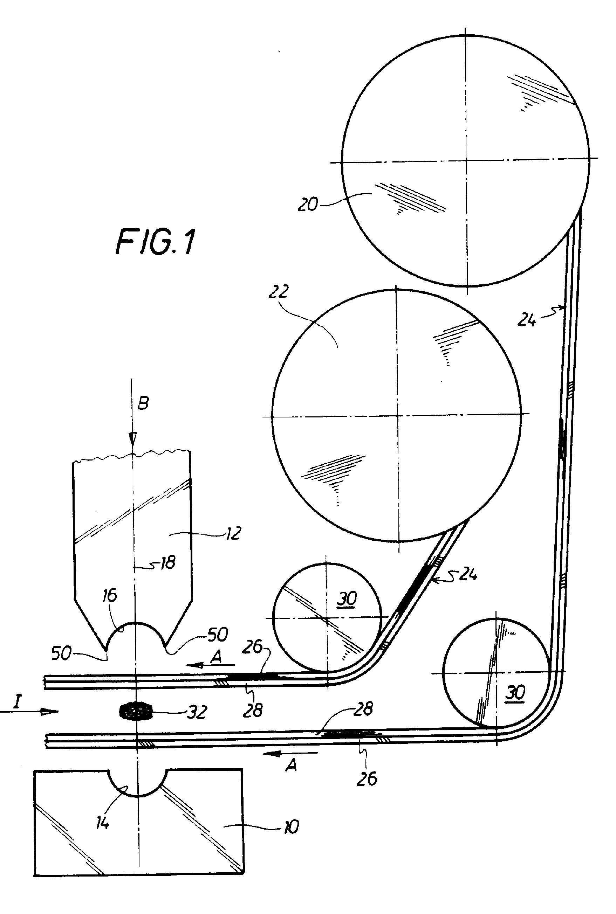

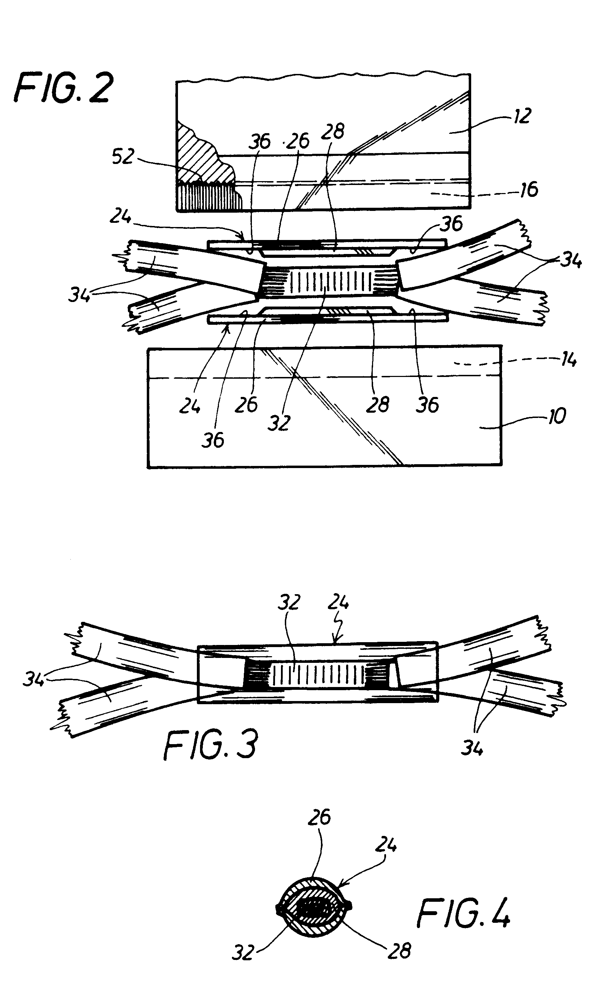

Die Figuren 1 und 2 zeigen eine Ultraschall-Schweissvorrichtung mit einem Amboss 10 und einer Sonotrode 12. Der Amboss 10 ist mit einer Ausnehmung 14 und die Sonotrode 12 ist mit einer Ausnehmung 16 ausgebildet. Die Ausnehmungen 14 und 16 liegen einander gegenüber und fluchten miteinander entlang einer in Figur 1 strichpunktiert dargestellten Linie 18. Die Vorrichtung weist ausserdem zwei Vorratseinrichtungen 20 und 22 auf, die als Vorratsrollen ausgebildet sind. Auf den Vorratsrollen 20 und 22 ist je ein streifenförmiges Umhüllungsmaterial 24 aufgewickelt, das aus zwei Lagen 26 und 28 mit unterschiedlichen Schmelztemperaturen besteht. Die beiden streifenförmigen, zweilagigen Umhüllungsmaterialien 24 werden von den Vorratsrollen 20 und 22 derart abgewickelt und um Umlenkrollen 30 herumgelenkt, dass die beiden streifenförmigen Umhüllungsmaterialien 24 in Richtung des Pfeiles A (siehe Figur 1) quer zu den Ausnehmungen 14 bzw. 16 zwischen dem Amboss 10 und der Sonotrode 12 hindurch vorgeschoben werden. Die streifenförmigen Umhüllungsmaterialien 24 sind dabei zwischen dem Amboss 10 und der Sonotrode 12 derart ausgerichtet, das die beiden Lagen 28 mit der niedrigeren Schmelztemperatur der Verbindungsstelle 32 der elektrisch leitenden Elementen 34, die in Figur 2 abschnittweise dargestellt sind, zugewandt sind.

Nach derAnordnung der beiden streifenförmigen Umhüllungsmaterialien 24 zwischen dem Amboss 10 und der Sonotrode 12 und der Anordnung der Verbindungsstelle 32 der elektrisch leitenden Elemente 34 zwischen den beiden streifenförmigen Umhüllungsmaterialien 24 wird die in Figur 1 abschnittsweise dargestellte Sonotrode 12 in Richtung des Pfeiles B gegen den Amboss 10 bewegt, so dass die beiden streifenförmigen Umhüllungsmaterialien 24 und die Verbindungsstelle 32 der elektrisch leitenden Elemente 34 im durch die Ausnehmungen 14 und 16 gegebenen Hohlraum liegen, wobei die streifenförmigen Umhüllungsmaterialien 24 um die Verbindungsstelle 32 herumgepresst werden. Während dieses Pressvorganges erweichen die einander und der Verbindungsstelle 32 zugewandten Lagen 28 mit dem niedrigeren Schmelzpunkt mindestens soweit, dass sie den Raum zwischen der Verbindungsstelle 32 und den beiden von aussen nachdrückenden Lagen 26 mit der höheren Schmelztemperatur ausfüllen und die Lagen 26 mit der höheren Schmelztemperatur die Verbindungsstelle 32 nach aussen hin dicht umschliessen. Eine derartige mit Umhüllungsmaterial 24 dicht umschlossene Verbindungsstelle 32 elektrisch leitender Elemente 34 ist in den Figuren 3 und 4 dargestellt. Die elektrisch leitenden Elemente 34 sind in Figur 3 Litzendrähte, die eine Isolation aufweisen.

Die Endbereiche der elektrisch leitenden Elemente 34 sind miteinander durch eine Ultraschall-Schweissung verbunden, so dass die Verbindungsstelle 32 kein Lötzinn oder andere Verbindungshilfsmittel aufweist.

Wie aus Figur deutlich ersichtlich ist, weist die der Verbindungsstelle 32 zugewandte Lage 28jedes streifenförmigen Umhüllungsmaterials 24 mit der niedrigeren Schmelztemperatur eine geringere Breite auf als die Lage 26 mit der höheren Schmelztemperatur. Durch eine derartige Ausbildung des erfindungsgemässen Umhüllungsmaterials 24, bei der die beiden Lagen 26 und 28 einstückig miteinander verbunden sind, bzw. bei welchen die Lage 28 mit der niedrigeren Schmelztemperatur eine Beschichtung der Lage 26 mit der höheren Schmelztemperatur sein kann, ergibt sich der Vorteil, dass nach dem Zusammenpressen der beiden streifenförmigen Umhüllungsmaterialien 24 um die Verbindungsstelle 32 herum die beiden Lagen 28 den Raum zwischen der Verbindungsstelle 32 und den beiden Lagen 26 vollständig ausfüllen und gleichzeitig die freien Randbereiche 36 der Lagen 26 mit der höheren Schmelztemperatur eng und dicht an der Isolation der elektrisch leitenden Elemente 34 anliegen. Diese dichte Umhüllung der Verbindungsstelle 32 mit den Lagen 28, die eine niedrigere Schmelztemperatur aufweisen als die Lagen 26, die an der Aussenseite der Umhüllung der Verbindungsstelle 32 angeordnet sind, ist in Figur 4 in einem Querschnitt dargestellt.

In Figur 2 ist die Sonotrode 12 abschnittsweise derart dargestellt, dass die in der Ausnehmung 16 vorhandenen Rillen 52 sichtbar sind. Diese Rillen 52 erstrecken sich in Querrichtung der Ausnehmung 16. Durch diese Querrillen 52 in der Ausnehmung 16 wird ein seitliches Verrutschen des streifenförmigen Umhüllungsmaterials 24 während des Umhüllungsvorganges der Verbindungsstelle 32 vermieden. Entsprechende Rillen können auch in der Ausnehmung 14 im Amboss 10 vorgesehen sein.

## Patentansprüche

1. Verfahren zur elektrisch isolierenden Umhüllung derVerb!ndungsste!!e (32) zwischen elektrisch leitenden Elementen (34) mit einem die Verbindungsstelle überdeckenden, streifenförmigen, elektrisch isolierenden Umhüllungsmaterial (24), das von Rollen abgewickelt und mittels einer Ultraschall-Schweißvorrichtung (10, 12) um die Verbindungsstelle (32) herum angeordnet wird, dadurch gekennzeichnet, daß das umhüllungsmaterial (24) zwei einstückig miteinander verbundene Lagen (26, 28) mit unterschied- lichen Schmelztemperaturen aufweist, von denen die Breite der Lage (28) mit der niedrigeren Schmelztemperatur geringer ist als die Breite der Lage (26) mit der Höheren Schmelztemperatür, und derart über der Verbindungsstelle (32) angeordnet wird, daß die Lage (28) mit der niedrigeren Schmelztemperatur sich auf der der Verbindungsstelle (32) zugewandten Seite und die Lage (26) mit der höheren Schmelztemperatur sich auf der der Verbindungsstelle (32) abgewandten Seite über dem Material mit der niedrigeren Schmelztemperatur befindet und daß das Umhüllungsmaterial (24) anschließend mittels der Ultraschall-Schweißvorrichtung um die Verbindungsstelle (32) herumgepreßt wird, wobei die Lage (28) mit der niedrigeren Schmelztemperatur mindestens so weit erweicht, daß sie den Raum zwischen der Verbindungsstelle (32) und der nachdrückenden Lage (26) mit der höheren Schmelztemperatur ausfüllt und die Lage (26) mit der höheren Schmelztemperatur die Verbindungsstelle (32) nach außen hin dicht umschließt.

2. Verfahren nach Anspruch 1, dadurch gekennzeichnet, daß das Umhüllungsmaterial (24) an zwei gegenüberliegenden Seiten über der Verbindungsstelle (32) angeordnet wird, wobei die zwei Lagen (28) mit der niedrigeren Schmelztemperatur der Verbindungsstelle (32) zugewandt werden.

3. Verfahren nach Anspruch 1, dadurch gekennzeichnet, daß das Umhüllungsmaterial (24) um die Verbindungsstelle (32) herumgewunden wird, wobei die Lage (28) mit der niedrigeren Schmelztemperatur der Verbindungsstelle (32) zugewandt wird.

4. Verfahren nach einem der Ansprüche 1 bis 3, dadurch gekennzeichnet, daß das Umhüllungsmaterial (24) streifenförmig ausgebildet ist und in einer zur Längsrichtung der Verbindungsstelle annähernd senkrechten Richtung zur Verbindungsstelle (32) zugeführt wird, und daß das streifenförmige Umhüllungsmaterial (24) nach der Umhüllung der Verbindungsstelle (32) mit der UltraschallSchweißvorrichtung (10, 12) seitlich neben der Verbindungsstelle (32) in Querrichtung des streifenförmigen Umhüllungsmaterials (24) abgetrennt wird.

5. Rollenförmiges gewickeltes streifenförmiges Umhüllungsmaterial zur Verwendung bei einem Verfahren zur elektrisch isolierenden Umhüllung der Verbindungsstelle (32) zwischen elektrisch leitenden Elementen (34), wobei es um die Verbindungsstelle herumgegreßt und verschweißt wird, dadurch gekennzeichnet, daß das Umhüllungsmaterial zwei Lagen (26, 28) mit unterschiedlichen Schmelztemperaturen aufweist, daß die Lage (28) mit der niedrigeren Schmelztemperatur mit der Lage (26) mit der höheren Schmelztemperatur zu dem Umhüllungsmaterial (24) einstückig verbunden ist, und daß die Breite der Lage (28) mit der niedrigeren Schmeiztemperatur geringer ist als die Breite der Lage (26) mit der höheren Schmelztemperatur.

6. Umhüllungsmaterial nach Anspruch 5, dadurch gekennzeichnet, daß die Lage (26) mit der höheren Schmelztemperatur an beiden Längskanten des streifenförmigen Umhüllungsmaterials (24) über die Lage (28) mit der niedrigeren Schmelztemperatur übersteht.

7. Umhüllungsmaterial nach Anspruch 5 oder6, dadurch gekennzeichnet, daß die Lage (26) mit der höheren Schmelztemperatur eine größere Härte aufweist als die Lage (28) mit der niedrigeren Schmelztemperatur.

8. Umhüllungsmaterial nach einem der Ansprüche 5 bis 7, dadurch gekennzeichnet, daß die Lage (26) mit der höheren Schmelztemperatur eine glattere Oberfläche aufweist als die Lage (28) mit der niedrigeren Schmelztemperatur.

9. Umhüllungsmaterial nach einem der Ansprüche 5 bis 8, dadurch gekennzeichnet, daß die Lage (28) mit der niedrigeren Schmelztemperatur eine Beschichtung auf der Lage (26) mit der höheren Schmelztemperatur ist.

10. Umhüllungsmaterial nach einem der Ansprüche 5 bis 9, dadurch gekennzeichnet, daß mindestens die Lage (26) mit der höheren Schmelztemperatur transparent ist.

11. Umhüllungsmaterial nach einem der Ansprüche 5 bis 10, dadurch gekennzeichnet, daß die Lage (26) mit der höheren Schmelztemperatur ein hartgestelltes Polyvinylchlorid mit einer Härte von 90 ± 5 nach Shore Aund die Lage (28) mit der niedrigeren Schmelztemperatur ein hochtemperaturbeständiges Weich-Polyvinylchlorid mit einer Härte von 50 ± 5 nach Shore A ist.

## Claims

1. A process for the electrically insulating sheathing of the connection (32) between electrically conducting elements (34) with an electrically insulating strip-like sheathing material (24) for covering the connection, which is unwound from rolls and arranged around the connection (32) by means of an ultrasonic welding apparatus (10, 12), characterized in that the sheathing material (24) comprises two layers (26, 28) with different melting temperatures, which are integrally connected together and of which the width of the layer (28) with the lower melting temperature is less than the width of the layer (26) with the higher melting temperature, and the sheathing material is arranged over the connection (32) in such a way that the layer (28) with the lower melting temperature is disposed on the side which is towards the connection (32) and the layer (26) with the higher melting temperature is disposed on the side which is remote from the connection (32) over the material with the lower melting temperature, and that the sheathing material (24) is then pressed around the connection (32) by means of the ultrasonic welding apparatus, wherein the layer (28) with the lower melting temperature softens at least to such an extend that itfills out the space between the connection (32) and the layer (26) with the higher melting temperature, which presses against the layer (28) with the lower melting temperature, and the layer (26) with the higher melting temperature encloses the connection (32) sealingly outwardly.

2. A process according to claim 1 characterised d in that the sheathing material (24) is arranged at two oppositely disposed sides over the connection (32), wherein the two layers (28) with the lower melting temperature are towards the connection (32).

3. A process according to claim 1 characterised in that the sheathing material (24) is wound around the connection (32), wherein the layer (28) with the lower melting temperature is towards the connection (32).

4. A process according to one of claims 1 to 3 characterised in that the sheathing material (24) is of a strip-like configuration and is fed to the connection (32) in a direction which is approximately normal to the longitudinal direction of the connection, and that the strip-like sheathing material (24) is severed laterally beside the connection (32) in the transverse direction of the strip-like sheathing material (24) after the operation of sheathing the connection (32), with the ultrasonic welding apparatus (10, 12).

5. A wound strip-like sheathing material in roll form for use in a process for the electrically insulating sheathing of the connection (32) between electrically conducting elements (34), wherein it is pressed around the connection and welded, characterized in that the sheathing material comprises two layers (26, 28) with different melting temperatures, that the layer (28) with the lower melting temperature is integrally connected to the layer (26) with the higher melting temperature to provide the sheathing material (24), and that the width of the layer (28) with the lower melting temperature is smaller than the width of the layer (26) with the higher melting temperature.

6. A sheathing material according to claim 5 characterised in that the layer (26) with the higher melting temperature projects at both longitudinal edges of the strip-like sheathing material (24) beyond the layer (28) with the lower melting temperature.

7. A sheathing material according to claim 5 or claim 6 characterised in that the layer (26) with the higher melting temperature is of greater hardness than the layer (28) with the lower melting temperature.

8. A sheathing material according to one of claims 5 to 7 characterised in that the layer (26) with the higher melting temperature has a smooother surface than the layer (28) with the lower melting temperature.

9. A sheathing material according to one of claims 5 to 8 characterised in that the layer (28) with the lower melting temperature is a coating on the layer (26) with the higher melting temperature.

10. A sheathing material according to one of claims 5 to 9 characterised in that at least the layer (26) with the higher melting temperature is transparent.

11. A sheathing material according to one of claims 5 to 10 characterised in that the layer (26) with the higher melting temperature is a hard-set Polyvinylchloride with a hardness of 90 ± 5 in accordance with Shore A and the layer (28) with the lower melting temperature is a high temperature-resistant soft Polyvinylchbr- ide with a hardness of 50 ± 5 in accordance with Shore A.

## Revendications

1. Procédé pour envelopper, d'une manière électriquement isolante, la zone de raccordement (32) entre des éléments électriquement conducteurs (34) au moyen d'un matériau d'enveloppement électriquement isolant (24) en forme de bande, qui est déroulé de rouleaux et qui recouvre la zone de raccordement et qui est mis en place, autour de la zone de raccordement (32), à l'aide d'un dispositif de soudage par ultrasons (10, 12)
charactérisé par le fait
que le matériau d'enveloppement (24) comporte deux couches (26, 28) reliées entre elles en une pièce ayant des températures de fusion différentes parmi lesquelles la largeur de la couche de point de fusion le plus bas est plus petite que la largeur de la couche de point de fusion le plus haut et est disposé autour de la zone de raccordement (32) de telle sorte que la couche (28) possédant la température de fusion la plus basse est située sur le côté tourné vers la zone de raccordement (32), et que la couche (26) possédant la température de fusion la plus élevée est située sur le côté tourné à l'opposé de la zone de raccordement (32), autour du matériau possédant la température de fusion la plus basse, et qu'on serre ensuite le matériau d'enveloppement (24) autour de la zone de raccordement (32) au moyen du dispositif de soudage par ultrasons, la couche (28) possédant la température de fusion la plus basse étant ramollie au moins au point de remplir l'espace compris entre la zone de raccordement (32) et la couche (26) réalisant une compression ultérieure et possédant la température de fusion la plus élevée, et que la couche (26) possédant la température de fusion la plus élevée entoure de façon étanche extérieurment la zone de raccordement (32).

2. Procédé suivant la revendication 1, caractérisé par le fait qu'on dispose le matériau d'enveloppement (24) sur deux côtés opposés et de part et d'autre de la zone de raccordement (32), les deux couches (28) possédant la température de fusion la plus basse étant tournées vers la zone de raccordement (32).

3. Procédé suivant la revendication 1, caractérisé par le fait qu'on enroule le matériau d'enveloppement (24) autour de la zone de raccordement (32), la couche (28) possédant la température de fusion la plus basse étant tournée vers la zone de raccordement (32).

4. Procédé suivant l'une des revendications 1 à 3, caractérisé par le fait que le matériau d'enveloppement (24) est réalisé sous la forme d'une bande et qu'on le fait arriver au niveau de la zone de raccordement (32) suivant une direction approximativement perpendiculaire à la direction longitudinale de la zone de raccordement et qu'après avoir enveloppé la zone de raccordement (32), on sectionne latéralement le matériau d'enveloppement (24) en forme de bande, à l'aide du dispositif de soudage par ultrasons (10,12), à côté de la zone de raccordement (32), dans la direction transversale du matériau d'enveloppement en forme de bande (24).

5. Matériau d'enveloppement, en forme de bande et enroulé en rouleau, destiné à être utilisé dans un procédé pour envelopper d'une manière électriquement isolante la zone de raccordement (31) entre des éléments électriquement conducteurs (34), en serrant l'enveloppe autour de la zone de raccordement et en la soudant, caractérisé par le fait que le matériau d'enveloppement possède deux couches (26, 28) ayant des températures de fusion différentes, que la couche (28) ayant la température de fusion la plus basse est reliée d'un seul tenant à la couche (26) ayant la température de fusion la plus élevée pour former le matériau d'enveloppement en forme de bande (24) et que la largeur de la couche (28) possédant la température de fusion la plus basse est inférieure à la largeur de la couche (26) possédant la température de fusion la plus élevée.

6. Matériau d'enveloppement suivant la revendication 5, caractérisé par le fait que la couche (26) possédant la temperature de fusion la plus élevée fait déborde, au niveau des deux bords longitudinaux du matériau d'enveloppement en forme de bande (24), la couche (28) possédant la température de fusion la plus basse.

7. Matériau d'enveloppement suivant la revendication 5 ou 6, caractérisé par le fait que la couche (26) possédant la température de fusion la plus élevée présente une dureté supérieure à celle de la couche (28) possédant la temperature de fusion la plus basse.

8. Matériau d'enveloppement suivant l'une des revendications 5 à 7, caractérisé par le fait que la couche (26) possédant la température de fusion la plus élevée présente une surface plus lisse que la couche (27) possédant la température de fusion la plus basse.

9. Matériau d'enveloppement suivant l'une des revendications 5 à 8, caractérisé par le fait que la couche (28) possédant la température de fusion la plus basse est un revêtement disposé sur la couche (26) possédant la température de fusion la plus élevée.

10. Matériau d'enveloppement suivant l'une des revendications 5 à 9, caractérisé par le fait qu'au moins la couche (26) possédant la température de fusion la plus élevée est transparente.

11. Matériau d'enveloppement suivant l'une des revendications 5 à 10, caractérisé par le fait que la couche (26) à température de fusion la plus élevée est formée par du polychlorure de vinyle durci possédant une durée Shore A égale à 90 ± 5 et que la couche (28) à température de fusion la plus basse est un polychlorure de vinyle mou, qui résiste aux températures élevées et possède une dureté Shore A égale à 50 ± 5.
